# EUROPÄISCHE PATENTSCHRIFT

(11) **EP 0 552 447 B1**
(45) Veröffentlichungstag und Bekanntmachung des Hinweises auf die Patenterteilung: **10.04.1996**
(21) Anmeldenummer: 92120630.6
(22) Anmeldetag: 02.12.1992
(51) Int. Cl.: B29C 45/07, B29C 45/50

(54) **Spritzgiesseinheit für die Verarbeitung von Kunststoffen und plastischen Materialien**
Injection moulding unit for processing plastics and plastic materials
Unité de moulage par injection pour le traitement de matières synthétiques et matières plastiques

(30) Priorität: 24.12.1991 DE 4142927
(43) Veröffentlichungstag der Anmeldung: 28.07.1993
(73) Patentinhaber: Hehl, Karl, D-72290 Lossburg (DE)
(72) Erfinder: Hehl, Karl, D-72290 Lossburg (DE)
(74) Vertreter: Reinhardt, Harry

(56) Entgegenhaltungen:
- EP-A- 0 055 464
- EP-A- 0 186 003
- EP-A- 0 454 991
- DE-U- 7 046 626

## Beschreibung

Die Erfindung bezieht sich auf eine Spritzgießeinheit für die Verarbeitung von Kunststoffen und plastischen Materialien entsprechend dem Oberbegriff des Patentanspruches 1.

Bei einer Einheit dieser Art nach dem DE-GM 70 46 626 sind Antriebszylinder und Einspritzzylinder derart hydraulisch hintereinander geschaltet, daß beide zwar eine Einheit bilden, aber getrennt beaufschlagt werden. Sie sind ineinandergeschachtelt und der Einspritzzylinder ist auf dem Antriebszylinder so aufgesetzt, daß der Zylinder des Antriebszylinders den Kolben des Einspritzzylinders trägt, der an Ausnehmungen des Zylinders des Antriebszylinders befestigt ist. Der mittelbar am Block befestigte Antriebszylinder kann erst nach Lösen einer Verschraubung und nach Verschiebung des Antriebszylinders zur Entfernung einer axialen Sicherung abgenommen werden, so daß einem raschen Austausch der Antriebszylinder die Befestigungsart entgegensteht. Als Zylinder für die Einspritzzylinder wird ein Gußteil eingesetzt, das zugleich die Einspritzbrücke bildet.

Bei einer weiteren Einheit dieser Art nach der DE-PS 34 47 597 sind die Enden der durch Stahlhülsen gebildeten eigentlichen Zylinder der Antriebszylinder in korrespondierenden Ringschultern des Blockes abgestützt. Die zugehörigen muffenartigen, die Führungssäulen dicht umschließenden Zylinderdeckel erstrecken sich nahezu über die ganze axiale Länge der Bohrungen und sind in diesen spielfrei eingepaßt. Demzufolge sind die Antriebszylinder erst nach vollständiger Montage der Spritzgießeinheit funktionsfähig.

Aus der DE-PS 37 35 419 ist eine weitere Einheit bekannt, bei der Antriebs- und Einspritzzylinder getrennt und gesondert im Trägerblock befestigt werden. Zwar sind die am Trägerblock verschraubten Zylinder somit leicht austauschbar und können vor Einbau auf Funktionsfähigkeit getestet werden, jedoch muß der aus Guß hergestellte Trägerblock entsprechend groß ausgebildet werden, um sämtliche Zylinder aufzunehmen. Mit zunehmender Größe des Gußteils ergeben sich aber auch zunehmend Probleme infolge von Lunkerbildungen beim Herstellungsprozeß. Ferner ist diese Ausbildung des Tragkörpers einem Einspritzen bei vertikal stehender Spritzgießeinheit in die Trennfuge nur schwerlich zugänglich.

Schließlich ist es auch noch aus der DE-PS 40 14 311 bekannt, zur Erreichung einer verbesserten Koaxialität der Zylinder diese über eine Mehrzahl von parallel zur Spritzachse etwa auf einer Kreislinie angeordneten Gewindebolzen am Trägerblock zu justieren.

Ausgehend von diesem Stand der Technik liegt der Erfindung die Aufgabe zugrunde, eine Kunststoff-Spritzgießeinheit der eingangs genannten Art derart weiterzubilden, daß sie den steigenden Ansprüchen, insbesondere hinsichtlich der Übertragung hoher Kräfte gewachsen ist, ohne dabei auf günstige Voraussetzungen für eine rationelle Serienfertigung zu verzichten.

Diese Aufgabe wird durch die im Anspruch 1 genannten Merkmale gelöst.

Bei dieser Lösung wird bei Herstellung der Zylinder der Antriebszylinder zugleich aus der Zylinderwandung der Kolben für den Einspritzzylinder hergestellt. Durch die einstückige Ausbildung ist aber diese Zylinder-Kolbenverbindung dafür geeignet, auch hohe Drücke problemlos und ohne Dichtungsschwierigkeiten aufzunehmen. Die Bearbeitung kann auf einfache Weise erfolgen, da Maßtoleranzen, insbesondere an den äußeren Zylinderwandungen, weniger ins Gewicht fallen, als z.B. Maßtoleranzen bei den Ausnehmungen nach dem Stand der Technik für die Aufnahme des Kolbens des Einspritzzylinders. Zudem ermöglicht der erheblich geringere Aufwand und Platzbedarf für die Befestigung der Zylinder ein Einspritzen sowohl im Linearanguß als auch in die Trennebene.

Bei einer Ausbildung nach Anspruch 2 sind die ineinandergeschachtelten Antriebs- und Einspritzzylinder vorzugsweise in Verbindung mit der Einspritzbrücke als eine gemeinsame bauliche Einheit mit einem relativ geringen Arbeitsaufwand in die Bohrungen des Trägerblockes einfügbar. Zudem besteht die Möglichkeit, vor der Montage die Antriebszylinder bzw. Einspritzzylinder auf ihre Arbeitsfähigkeit zu überprüfen, da zu diesem Zweck lediglich der Antriebszylinder mit dem Zylinderdeckel verschlossen werden muß. Im Betrieb des Käufers ist dann aber im Falle einer Betriebsstörung ein Austausch auch von weniger geschultem Personal möglich, da nur wiederum der vordere Zylinderdeckel abgenommen werden muß, um die Antriebszylinder aus dem Trägerblock zu lösen. Somit lassen sich dann aber die Betriebsausfallzeiten wesentlich verkürzen. Ferner sind beide Zylinder als Stahlhülsen ausgebildet. In der Praxis hat sich nämlich gezeigt, daß die Verwendung von Gußteilen insbesondere beim Einsatz unter hohen Drücken Schwierigkeiten bereitet, da die beim Guß auftretenden Lunker nahezu 25% der Gußteile für den Einsatz unbrauchbar machen. Die Verwendung von Stahlhülsen erleichtert aber auch die einstückige Herstellung von Zylinder des Antriebszylinders und Kolben des Einspritzzylinders, da der Kolben einfach aus der Wandung des Zylinders herausgearbeitet werden kann.

Bei einer Ausbildung nach Anspruch 3 lassen sich beim Einbau der Antriebszylinder koaxiale Abweichungen einfach dadurch ausgleichen, daß an den einzelnen Gewindebolzen nach Bedarf nachgespannt wird. Zudem sind die Kräfte, die für das Festspannen der Gewindebolzen erforderlich sind, erheblich geringer sind als diejenigen Kräfte, die erforderlich wären, eine Mutter im Trägerblock zu verankern. So lassen sich durch die nachträgliche Einstellbarkeit Spannungen vermeiden, die sich im Gefüge des Gesamtsystems nachteilig auswirken und geeignet sind, die Lebensdauer der Förderschnecke zu verringern.

Bei einer Ausbildung nach Anspruch 8 bringt der den Zylinderraum für das Rückziehen der Schnecke verringernde vergrößerte Außendurchmesser im hinteren Bereich des Zylinders der Antriebszylinder den Vorteil mit sich, daß die Rückzugbewegung der Förderschnecke schneller erfolgen kann, als die aus dem anderen Zylinderraum bewirkte Vorwärtsbewegung der Förderschnecke beim Einspritzen. Zudem bildet die unterschiedliche Größe der Zylinderräume eine wesentliche Voraussetzung für die Regelbarkeit der Bewegungen, insbesondere wenn der Nach- oder Staudruck geregelt werden soll.

Die Zuführung des Druckmediums über einen Ringkanal nach Anspruch 11 führt zu einem gleichmäßigen Einströmen des Druckmediums in die Zylinderräume. Wird dabei der Abfluß am oberen Ende des Ringkanals angeordnet, so kann auch Begleiterscheinungen, wie z.B. dem Auftreten von Luftblasen, wirksam entgegengewirkt werden. Dabei läßt sich eine exakte Steuerung der jeweils einander zugeordneten Zylinderräume dadurch erreichen, daß anstelle elastischer Leitungen starre Zuleitungen eingesetzt werden, so daß die Materialelastizität der Leitungen keinen Einfluß auf den Druck in den Zylinderräumen hat. Aber auch die symmetrische Ausbildung sämtlicher Zuleitungen mit jeweils identischen Querschnitten führt dazu, daß hinsichtlich der Drucksteuerung oder -regelung Probleme nachhaltig vermieden werden.

Weitere Vorteile ergeben sich aus den Unteransprüchen. Im folgenden wird die Erfindung anhand eines Ausführungsbeispiels erläutert. Es zeigen:
- Fig. 1: Die Spritzgießeinheit in einer Draufsicht,
- Fig. 2: die Spritzgießeinheit gemäß Fig. 1 in Seitenansicht,

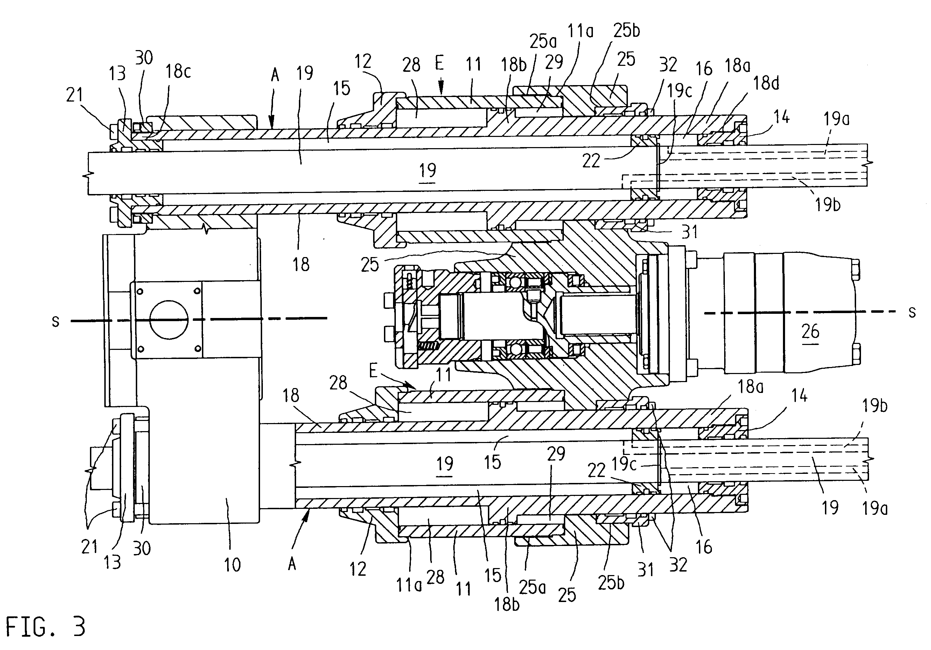

- Fig. 3: einen horizontalen Schnitt in Höhe der Führungssäulen durch die Spritzgießeinheit in vergrößerter Darstellung,
- Fig. 4: einen vertikalen Schnitt durch eine Führungssäule gemäß Fig. 3,

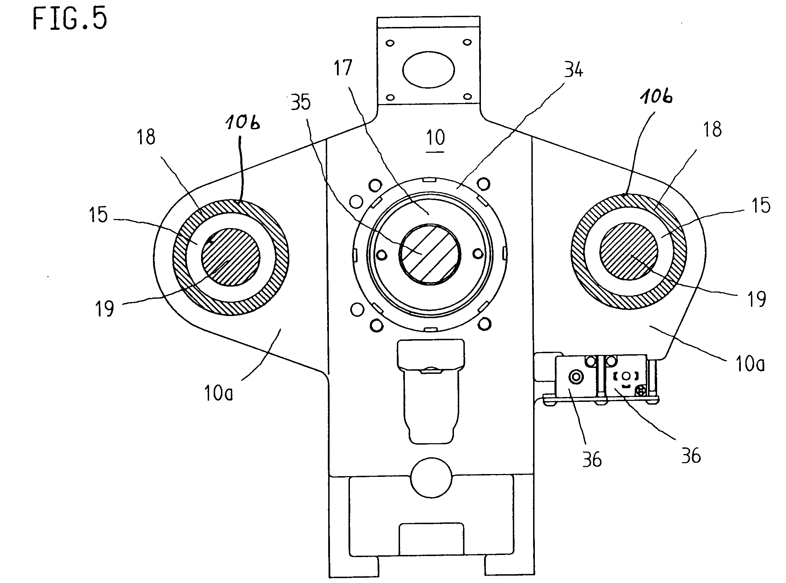

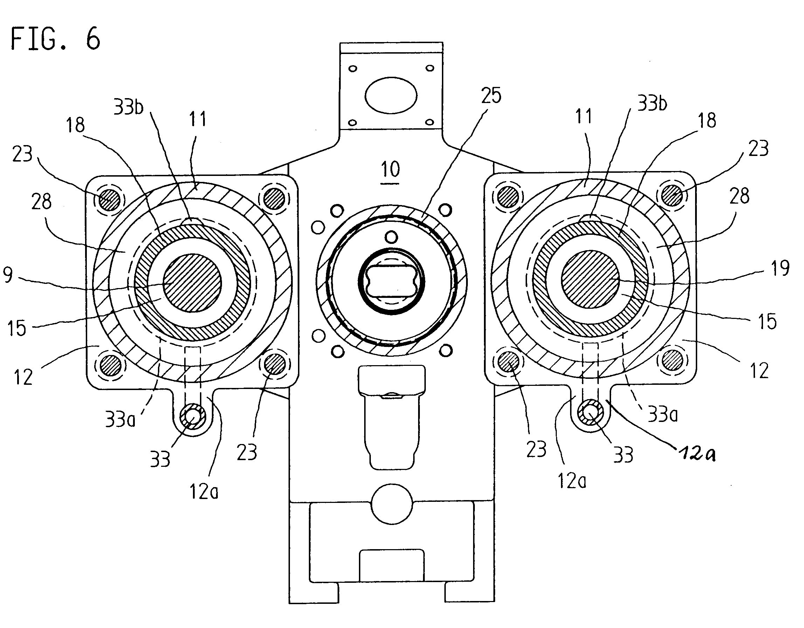

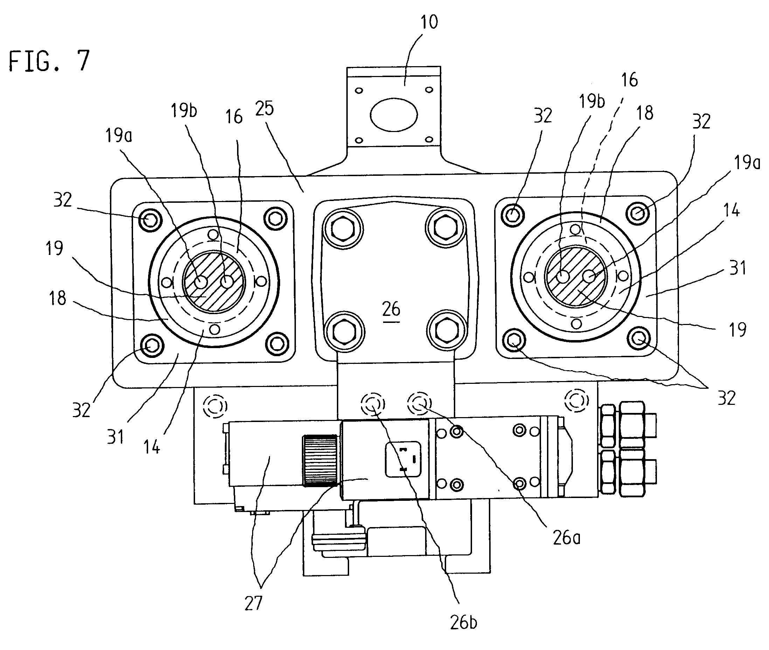

- Fig. 5,6,7: Schnitte durch die Kunststoff-Spritzgießeinheit gemäß den Linien V-V, VI-VI und VII-VII von Fig. 1.

Die Spritzgießeinheit umfaßt einen den Plastifizierzylinder 17 mit einer Mutter 34 aufnehmenden Trägerblock 10. Der Plastifizierzylinder 17 ist Bestandteil einer mit Heizeinrichtungen versehenen Plastifiziereinheit. Der Block 10 ist mit zwei symmetrisch zur Spritzachse s-s liegenden Bohrungen 10b in seinen Flügelbereichen 10a versehen, in denen hydraulische Antriebszylinder A zum axialen Verschieben der Spritzgießeinheit auf Führungssäulen 19 aufgenommen sind. Die Ringkolben 22 der Antriebszylinder A sitzen auf den Führungssäulen 19 fest auf, die an einem stationären Formträger der Kunststoff-Spritzgießmaschine axial festlegbar sind, die für die Verarbeitung von Kunststoffen oder von plastischen Materialien wie z.B. keramischer Massen bestimmt ist. Die Antriebszylinder bestehen somit je aus einer Führungssäule 19 mit zugehörigen Kolben 22, einem durch eine Stahlhülse gebildeten eigentlichen Zylinder 18 und zwei Zylinderdeckeln 13,14.

Am Trägerblock 10 sind mittelbar zwei ebenfalls symmetrisch zur Spritzachse s-s angeordnete hydraulische Einspritzzylinder E abgestützt, die zum axialen Antreiben einer im Plastifizierzylinder angeordneten, rotierbaren Förderschnecke vorgesehen sind. Der Zylinder 18 der Antriebszylinder A trägt zugleich den Kolben für den Zylinder 11 der Einspritzzylinder E. Die Stahlhülse des Zylinders 11 des Einspritzzylinders E umschließt koaxial die Stahlhülse 18 des Antriebszylinders A. Bedarfsweise können auch mehrere Antriebs- und Einspritzzylinder vorgesehen werden.

Als Kolben für den Einspritzzylinder ist am Zylinder 18 des Antriebszylinders ein Radialflansch 18b vorgesehen, der aus der Stahlhülse des Zylinders 18 herausgearbeitet ist und insofern mit diesem Zylinder 18 einstückig ist. Jedoch ist auch eine andere Herstellungsweise möglich.

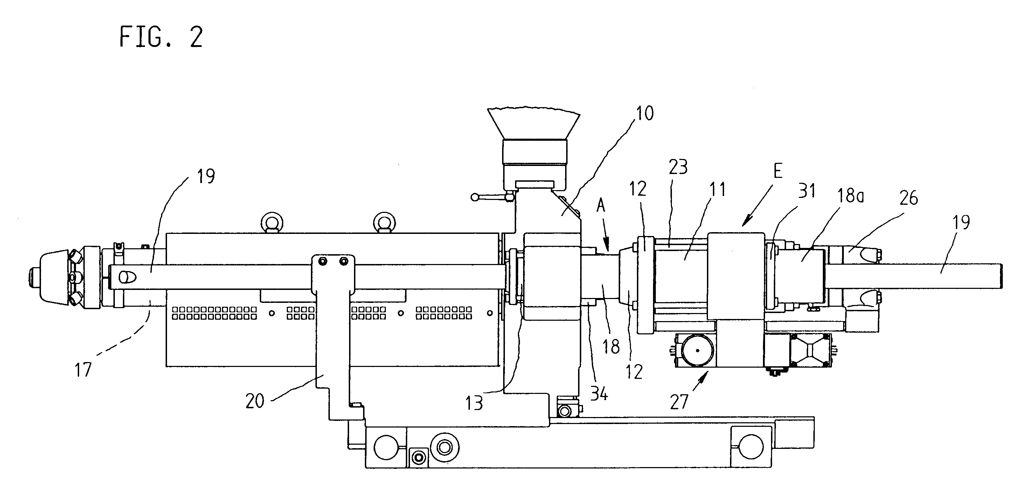

Wie aus Fig. 2 ersichtlich, sind die Antriebszylinder A vom Trägerblock 10 frei getragen, wobei zwei Drittel der Länge der Antriebszylinder A rückseitig aus dem Flügelbereich 10a herausragen. Die Einspritzzylinder ihrerseits sind hinter dem Trägerblock angeordnet und sind in einer Einspritzbrücke 25 festgelegt, die den Rotationsmotor 26 für die Förderschnecke trägt und einen Lagerblock für Einrichtungen zur Übertragung des Drehmomentes vom Rotationsmotor 26 auf die Förderschnecke 35 beinhaltet.

Die Antriebszylinder A und die Einspritzzylinder E sind mitsamt der Einspritzbrücke als gemeinsame bauliche Einheit am Trägerblock 10 verankert. Diese Verankerung erfolgt über einen Zylinderdeckel 13, der am Trägerblock über mehrere annäherungsweise parallel zur Spritzachse s-s etwa auf einer Kreislinie angeordnete Gewindebolzen 21 gehalten ist. Diese Gewindebolzen übergreifen ihrerseits eine Einstellmutter 30, die am vorderen Abschluß 18c des Zylinders 18 der Antriebszylinder A mittels Gewinde verschraubt ist und der baulichen Einheit als Anlage am Trägerblock dient. Auf der Führungssäule 19 ist der Ringkolben 22 stationär an einem Radialring 19c der Führungssäule befestigt. Vor und hinter dem Ringkolben enden zwei Achsialbohrungen, die als Versorgungskanäle 19a,19b für die Zylinderräume 15,16 des Antriebszylinders A ausgebildet sind. Die Zylinderräume 15,16 werden begrenzt durch die als Kolbenstangen dienenden Führungssäulen 19 sowie die Stahlhülse des eigentlichen Zylinders 18. Der Zylinderraum 16 wird in axialer Richtung durch den Kolben 22 und den Zylinderdeckel 14 begrenzt, der in ein Gewinde 18d im Endbereich 18a des Zylinders 18 eingeschraubt ist und zum Rückfahren der Spritzgießeinheit von der Formplatte dient. Der andere Zylinderraum des Antriebszylinders liegt vor dem Zylinderraum 16 und dient zum Heranfahren der Spritzgießeinheit an die Formplatte. Er wird in axialer Richtung durch den Ringkolben 22 und den Zylinderdeckel 13 begrenzt, der auch bereits vor Endmontage am Trägerblock am Zylinder angeordnet werden kann und diesen somit einer Prüfung auf Funktionsfähigkeit zugänglich macht. Der Ringkolben 22 ist grundsätzlich beidseitig beaufschlagbar.

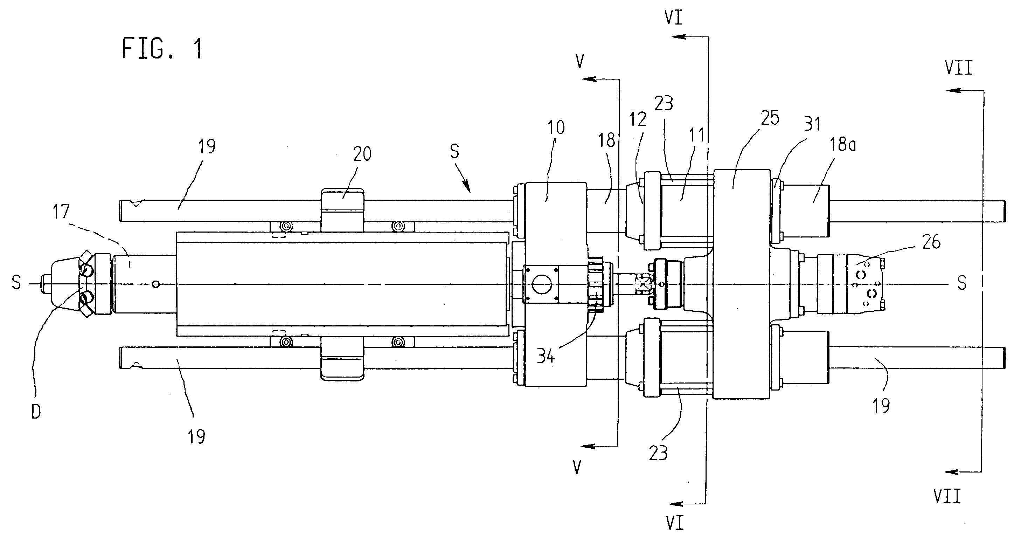

Der Zylinder 18, der mit dem Kolben für den Einspritzzylinder E einstückig verbunden ist, dient gleichzeitig als Kolbenstange für den Einspritzzylinder E. Er ist über eine Kolbenstangenführung 31 an einer Ausnehmung 25b der Einspritzbrücke 25 axial beweglich befestigt. Die Kolbenstangenführung 31 ist von mehreren Gewindebolzen 32 durchgriffen, die sich an der Einspritzbrücke abstützen. Auch der Radialflansch 18b des Zylinders 18 ist beidseitig beaufschlagbar. Er begrenzt in axialer Richtung die Zylinderräume 28,29 für die Axialbewegung der Schnecke. Durch Beaufschlagung des Zylinderraumes 28 wird die Förderschnecke auf die Formplatte zu bewegt. Dieser Zylinderraum wird dabei durch die beiden Stahlhülsen und in axialer Richtung noch durch den Zylinderdeckel 12 begrenzt, der sich über Spannbolzen 23 (Fig. 1,2) an der Einspritzbrücke 25 abstützt. Zu diesem Zweck sind die Stahlhülsen des Zylinders 11 auch in Zentrierungsausnehmungen 25a der Einspritzbrücke 25 gehalten. Endbereiche 11a der Zylinder mit verringertem Durchmesser greifen in entsprechend geformte Teile des Zylinderdeckels 12 und der Einspritzbrücke 25 ein. Der hintere Zylinderraum 29 des Einspritzzylinders E dient zum Zurückziehen der Schnecke und wird durch die Stahlhülsen sowie durch die Einspritzbrücke begrenzt, die somit als Zylinderdeckel dient. Dieser Zylinderraum ist durch einen Endbereich 18a des Zylinders 18 mit größerem Außendurchmesser gegenüber dem Zylinderraum 28 verkleinert, so daß das Zurückziehen der Schnecke bei sonst gleichen Randbedingungen schneller erfolgen kann als die Bewegung beim Einspritzen.

Die Hydraulik ist grundsätzlich unterhalb der Einspritzbrücke 25 angeordnet, was zu kurzen Wegen zwischen den Hydraulikventilen 27 und den Druckräumen beiträgt. Die Zuleitungen sind grundsätzlich symmetrisch zur Spritzachse s-s angeordnet und starr mit identischen Querschnitten ausgebildet, um eine gleichmäßige Beanspruchung und einen möglichst symmetrischen Bewegungsablauf zu erzielen.

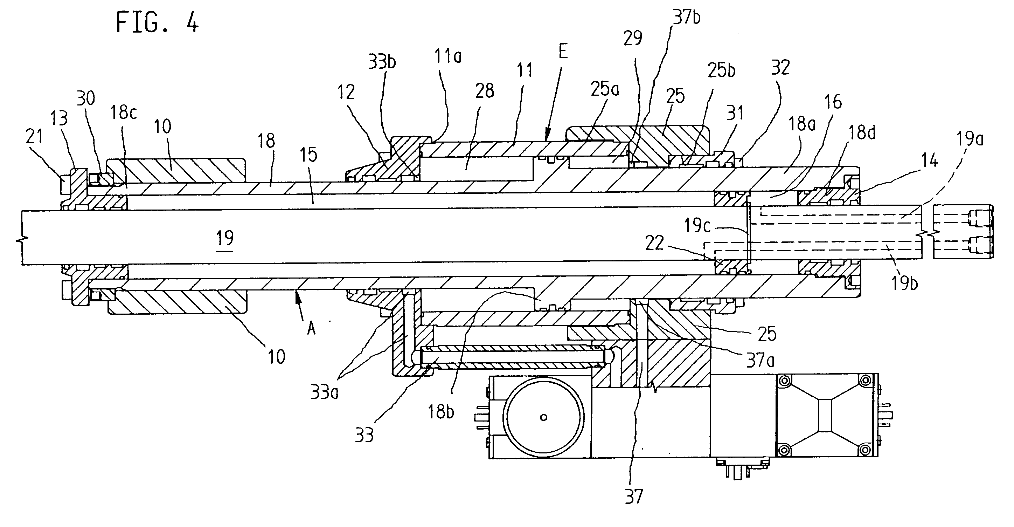

Wie aus Fig. 4 ersichtlich, werden die Zylinderräume 28 und 29 über Versorgungskanäle 33,37 mit Druckmedium versorgt. Dabei sind grundsätzlich die Zuläufe über Ringkanäle 33a,37a ausgebildet, die über einen Auslauf 33b,37b das Druckmedium in die jeweiligen Zylinderräume einführen. Der Kanal 37 befindet sich dabei in der Einspritzbrücke, wobei der Auslauf 37b am Grund der Zentrierungsausnehmung 25a in den Zylinderraum 29 übergeht. Die Zufuhr des Druckmediums in den Zylinderraum 28 erfolgt über einen Versorgungskanal 33, wobei der Auslauf 33b und der Ringkanal 33a im Zylinderdeckel 12 vorgesehen ist. Aus der Fig. 4 ergibt sich dabei auch, daß ein Stück des Versorgungskanals 33 zwischen Einspritzbrücke und Zylinderdeckel eingespannt ist, wobei die Aufspannbewegung beim Anziehen der Spannbolzen 23 erfolgt.

Der Zusammenbau der Kunststoff-Spritzgießeinheit erfolgt dergestalt, daß über die Zylinder 18 die Zylinder 11 gestülpt werden und diese dann gemeinsam über die Spannbolzen 23 an der Einspritzbrücke 25 befestigt werden. Die hintere Befestigung erfolgt dabei über die Kolbenstangenführung 31 mit den Schrauben 32. Der Zylinder 18 wird rückseitig mit dem Zylinderdeckel 14 versehen und sodann wird die bisher bestehende Einheit über die Führungssäulen mit dem darauf angeordneten Kolben 22 geschoben. Dabei wird zugleich die Durchführung durch die Bohrung 10b des Trägerblocks vorgenommen. Auf der Vorderseite wird dann die Einstellmutter 30 auf ein Gewinde im Endbereich 18c des Zylinders 18 geschraubt und somit eine Anlage der baulichen Einheit am Trägerblock 10 geschaffen. Nun wird noch der Zylinderraum 15 durch die Einführung des Zylinderdeckels 13 verschlossen und der Deckel mit den Schrauben 21 am Trägerblock befestigt. Sodann erfolgt noch der Anschluß der gesamten Hydraulik an die hydraulischen Einrichtungen der Kunststoff-Spritzgießmaschine. Der Rotationsmotor 26 wird dabei über die Versorgungsleitungen 26a,26b mit Druckmedium versorgt.

Da es zudem erforderlich ist, die gesamte Spritzgießeinheit auch bedarfsweise abzutransportieren, besitzt sie ferner noch einen Träger 20, der die Spritzgießeinheit im vorderen Bereich abstützt. Die Bewegungen werden zudem über Linearpotentiometer 36 gemessen.

## Patentansprüche

1. Spritzgießeinheit für die Verarbeitung von Kunststoffen und plastischen Materialien mit einem den Plastifizierzylinder (17) aufnehmenden Trägerblock mit wenigstens zwei symmetrisch zur Spritzachse (s-s) im Trägerblock (10) aufgenommenen hydraulischen Antriebszylindern (A) zum axialen Verschieben der Spritzgießeinheit auf Führungssäulen (19), deren Kolben (Ringkolben 22) auf den Führungssäulen (19) fest aufsitzen und mit wenigstens zwei symmetrisch zur Spritzachse am Trägerblock (10) abgestützten hydraulischen Einspritzzylindern (E) zum axialen Antreiben einer im Plastifizierzylinder angeordneten rotierbaren Förderschnecke (35), wobei die Zylinder (18) der Antriebszylinder (A) zugleich die Kolben für die Zylinder (11) der Einspritzzylinder (E) tragen und von diesen (11) koaxial umschlossen sind,
dadurch gekennzeichnet, daß die Zylinder (18) der Antriebszylinder (A) einstückig mit dem als Radialflansch (18b) des Zylinders (18) ausgebildeten Kolben für den Zylinder (11) der Einspritzzylinder (E) sind.

2. Einheit nach Anspruch 1, dadurch gekennzeichnet, daß Antriebszylinder (A) und Einspritzzylinder (E) als eine gemeinsame bauliche Einheit im Trägerblock (10) durch einen Zylinderdeckel (13) festlegbar sind und daß ihre Zylinder (11,18) als Stahlhülsen ausgebildet sind.

3. Einheit nach Anspruch 2, dadurch gekennzeichnet, daß der Zylinderdeckel (13) am Trägerblock (10) zum Fixieren durch mehrere annäherungsweise parallel zur Spritzachse (s-s) etwa auf einer Kreislinie angeordnete Gewindebolzen (21) gehalten ist.

4. Einheit nach einem der vorhergehenden Ansprüche, dadurch gekennzeichnet, daß die einem Antriebszylinder (A) zugeordneten Gewindebolzen (21) eine Einstellmutter (30) übergreifen, die am vorderen Abschluß (18c) des Zylinders (18) der Antriebszylinder (A) verschraubt ist und der baulichen Einheit als Anlage am Trägerblock (10) dient.

5. Einheit nach einem der vorhergehenden Ansprüche, dadurch gekennzeichnet, daß der auf der Führungssäule (19) stationär angeordnete Ringkolben (22) an einem Radialring (19c) der Führungssäule (19) befestigt ist.

6. Einheit nach einem der vorhergehenden Ansprüche, dadurch gekennzeichnet, daß in der Führungssäule (19) zwei weitgehend parallel verlaufende Versorgungskanäle (19a,19b) für die Druckräume (15,16) des Antriebszylinders (A) vorgesehen sind, aus denen das Druckmedium den Ringkolben (22) beidseitig beaufschlagt.

7. Einheit nach einem der vorhergehenden Ansprüche, dadurch gekennzeichnet, daß der Antriebszylinder (A) über eine Kolbenstangenführung (31) an einer Ausnehmung (25b) einer die beiden Einspritzzylinder (E) verbindenden und einen Rotationsmotor (26) der Förderschnecke tragenden Einspritzbrücke (25) axial beweglich befestigt ist, welche Kolbenstangenführung von mehreren Gewindebolzen (32) durchgriffen ist, die sich an der Einspritzbrücke (25) abstützen, und daß der vordere, den Zylinder (18) des Antriebszylinders (A) umschließende Zylinderdeckel (12) von Spannbolzen (23) durchgriffen ist, die sich an der Einspritzbrücke (25) abstützen.

8. Einheit nach einem der vorhergehenden Ansprüche, dadurch gekennzeichnet, daß der beidseitig beaufschlagbare Radialflansch (18b) zwei Zylinderräume (28,29) des Einspritzzylinders (E) gegeneinander abgrenzt, wobei das Volumen des einen Zylinderraumes (29) gegenüber dem des anderen Zylinderraumes (28) durch einen Abschnitt größeren Außendurchmessers des Zylinders (18) des Antriebszylinders (A) verringert ist, welcher (18) die innere Mantelfläche der beiden Zylinderräume (28,29) bildet.

9. Einheit nach einem der vorhergehenden Ansprüche, dadurch gekennzeichnet, daß die Stahlhülse des Zylinders (11) des Einspritzzylinders (E) in einer Zentrierausnehmung (25a) der Einspritzbrücke (25) gehalten ist, deren Grund zugleich den Zylinderdeckel des Zylinderraumes (29) bildet.

10. Einheit nach einem der vorhergehenden Ansprüche, dadurch gekennzeichnet, daß ein Versorgungskanal (33,37) den Zylinderraum (28,29) mit Druckmedium versorgt, wobei der Zulauf über einen Ringkanal (33a,37a) im Bereich des Zylinderdeckels (12) erfolgt, der in einem Auslauf (33b,37b) endet, und daß die Hydraulikventile (27) im Bereich der Einspritzbrücke (25) angeordnet sind und über symmetrische zur Spritzachse (s-s) angeordnete, starre Zuleitungen mit identischen Querschnitten die Zylinderräume mit Druckmedium versorgen.

## Claims

1. Injection moulding unit for processing plastics and plastics materials, with a carrier block accommodating the plasticising cylinder (17), said carrier block having at least two hydraulic drive cylinders (A), accommodated in the carrier block (10), symmetrically to the injection axis (s - s) , for axial displacement of the injection moulding unit on tie bars (19), whose pistons (annular pistons 22) sit securedly on the tie bars (19), and with at least two hydraulic injection cylinders (E), supported symmetrically to the injection axis on the carrier block (10), for driving axially a rotatable feed worm (35) located in the plasticising cylinder, the cylinders (18) of the drive cylinders (A) at the same time carrying the pistons for the cylinders (11) of the injection cylinder (E)and being coaxially surrounded thereby,
characterised in that the cylinders (18) of the drive cylinder (A) are integral with the piston, in the form of a radial flange (18b) of the cylinder (18), for the cylinder (11) of the injection cylinder (E).

2. Unit according to claim 1, characterised in that drive cylinder (A) and injection cylinder (E), as a single constructive unit, are securable in the carrier block (10) by a cylinder cover (13), and in that their cylinders (11, 18) are in the form of steel sleeves.

3. Unit according to claim 2, characterised in that the cylinder cover (13) is held for fixing on the carrier block (10) by a plurality of threaded bolts (21), located almost parallel to the injection axis (s - s) and approximately on a circular line.

4. Unit according to one of the preceding claims, characterised in that the threaded bolts (21) associated with a drive cylinder (A) engage above a setting nut (30) which is screwed into the forward end (18c) of cylinder (18) of the drive cylinder (A), serving as a contact on the carrier block (10) for the constructive unit.

5. Unit according to one of the preceding claims, characterised in that the annular piston (22), stationarily mounted on the tie bar (19) is secured on a radial ring (19c) of the tie bar (19).

6. Unit according to one of the preceding claims, characterised in that there are provided in the tie bar (19) two substantially parallel-extending supply ducts (19a, 19b) for the pressure spaces (15, 16) of the drive cylinder (A), pressure medium from said ducts charging the annular piston (22) on both sides.

7. Unit according to one of the preceding claims, characterised in that the drive cylinder (A) is axially movably secured by a piston-rod guide (31) to a recess (25b) of an injection bridge (25) connecting the two injection cylinders (E) and carrying a revolving motor (26) of the feed worm; said piston-rod guide is penetrated by a plurality of threaded bolts (32) which are supported on the injection bridge, and in that the forward cylinder cover (12) surrounding the cylinder (18) of the drive cylinder (A) is penetrated by clamp bolts (23), which are supported on the injection bridge (25).

8. Unit according to one of the preceding claims, characterised in that the radial flange (18b) which is chargeable on both sides, defines two cylinder spaces (28, 29) of the injection cylinder (E) from one another, the volume of one cylinder space (29) compared to that of the other cylinder space (28) being reduced by a portion with enlarged diameter of the cylinder (18) of drive cylinder (A) which forms the inner surrounding surface of the two cylinder spaces (28, 29).

9. Unit according to one of the preceding claims, characterised in that the steel sleeve of the cylinder (11) of the injection cylinder (E) is held in centering recesses (25a) of the injection bridge (25), the base of which defines the cylinder cover (12) of cylinder space (29).

10. Unit according to one of the preceding claims, characterised in that a supply duct (33, 37) provides the cylinder space (28, 29|) with pressure medium, inlet being effected through an annular duct (33a, 37a) in the region of the cylinder cover (12) and terminating in an outlet (33b, 37b), and in that the hydraulic valves (27) are disposed in the region of the injection bridge (25) and supplying the cylinder spaces with pressure medium through rigid feed pipes disposed symmetrically to the injection axis (s - s) and having identical cross-sections.

## Revendications

1. Unité de moulage par injection pour le travail de matière synthétique et matière plastique
comprenant un bloc de support recevant un cylindre de plastification,
comprenant au moins deux vérins hydrauliques de déplacement (A) installés dans le bloc de support (10) symétriquement par rapport à l'axe d'injection (s-s) et prévus pour le déplacement axial de l'unité de moulage le long de colonnes de guidage (19), vérins dont les pistons (pistons annulaires 22) sont solidaires des colonnes de guidages (19),
et comprenant au moins deux vérins hydrauliques d'injection (E) installés sur le bloc de support (10) symétriquement par rapport à l'axe de d'injection et prévus pour le déplacement axial d'une vis transporteuse (35) mobile en rotation à l'intérieur du cylindre de plastification,
dans lesquels le cylindre (18) du vérin de déplacement (A) porte simultanément le piston du cylindre (11) du vérin d'injection (E) par qui (11) il (18) est entouré coaxialement,
caractérisée en ce que le cylindre (18) du vérin de déplacement (A) est d'un seul tenant avec le piston du cylindre (11) du vérin d'injection (E), lequel piston est réalisé sous la forme d'un collerette radiale (18b) du cylindre (18).

2. Unité selon la revendication 2, caractérisée en ce que le vérin de déplacement (A) et le vérin d'injection (E) sont fixés au bloc de support (10) en tant qu'unité constructive commune au moyen d'un couvercle de cylindre (13), et en ce que leurs cylindres (11,18) sont réalisés par des chemises d'acier.

3. Unité selon la revendication 2, caractérisée en ce que le couvercle de cylindre (13) prévu pour la fixation au bloc de support (10) est tenu par une pluralité de boulons (21) sensiblement parallèles à l'axe d'injection et disposés le long d'une ligne sensiblement circulaire.

4. Unité selon l'une des revendications précédentes, caractérisée en ce que des boulons de serrage (21) appartenant au vérin de déplacement (A) passent par un écrou de fixation (30) qui est vissé en l'extrémité frontale du cylindre (18) du vérin de déplacement (A) et qui constitue pour l'unité de construction la pièce de raccord au bloc de support.

5. Unité selon l'une des revendications précédentes, caractérisée en ce que le piston annulaire (22) immobile sur la colonne de guidage est fixé à un anneau radial (19c) de la colonne de guidage (19).

6. Unité selon l'une des revendications précédentes, caractérisée en ce que deux conduits parallèles d'alimentation (19a,19b) des chambres de pressions (15,16) du vérins de déplacement (A) sont ménagés dans la longueur de la colonne de guidage (19), conduits d'où le fluide de pression agit de part et d'autre du piston annulaire (22).

7. Unité selon l'une des revendications précédentes, caractérisée en ce que le vérin de déplacement est fixé mobile en déplacement axial au travers d'un guidage d'axe de piston (31) à une cavité (25b) d'un pont d'injection (25) reliant les deux vérins d'injection (E) et portant un moteur de rotation (26) de la vis transporteuse, lequel guidage d'axe de piston est traversé par une pluralité de boulons (32) venant s'engager dans le pont d'injection (25); et en ce que le couvercle de cylindre (12), entourant le cylindre (18) du vérin de déplacement (A), est traversé par une pluralité de boulons de serrage (23) venant s'engager dans le pont d'injection (25).

8. Unité selon l'une des revendications précédentes, caractérisée en ce que la collerette radiale (18b) atteignable de part et d'autre délimite deux espaces cylindriques (28,29) du vérin d'injection (E) l'un par rapport à l'autre, et dans lesquels le volume de l'un des espaces cylindriques (28) est diminué par la partie de diamètre externe agrandie du cylindre (18) du vérin de déplacement (A), ce cylindre (18) constituant la paroi interne des deux espaces cylindrique (28,29).

9. Unité selon l'une des revendications précédentes, caractérisée en ce que la chemise d'acier du cylindre (11) du vérin d'injection (E) est tenue dans une cavité de centrage (25a) du pont d'injection (25), dont le fond constitue simultanément le couvercle de cylindre de l'espace cylindrique (29).

10. Unité selon l'une des revendications précédentes, caractérisée en ce que un conduit d'alimentation (33,37) fournit les espaces cylindriques (28,29) en fluide de pression, une partie du conduit étant réalisé sous la forme d'un canal annulaire (33a, 37a) au niveau du couvercle de cylindre (12) et terminant en une embouchure (33b,37b), et en ce que des clapets hydrauliques (27) sont disposés au niveau du pont d'injection (25) et alimentent les espaces cylindriques en fluide de pression aux travers de conduits rigides symétriques par rapport à l'axe d'injection (s-s), et de sections uniformes.
